# EUROPÄISCHE PATENTSCHRIFT

(11) **EP 2 175 399 B1**
(45) Veröffentlichungstag und Bekanntmachung des Hinweises auf die Patenterteilung: **20.07.2011**
(21) Anmeldenummer: 09172898.0
(22) Anmeldetag: 13.10.2009
(51) Int. Cl.: G06K 19/077

(54) **Verwendung eines Transponders und Verfahren**
Use of a transponder and method
Utilisation d'un transpondeur et procédé

(30) Priorität: 13.10.2008 EP 08166450
(43) Veröffentlichungstag der Anmeldung: 14.04.2010
(73) Patentinhaber: Evonik Energy Services GmbH, 45128 Essen (DE)
(72) Erfinder: Offermann, Wolfgang, 45257 Essen (DE); Stephan, Dr. Martin, 47445 Moers (DE)
(74) Vertreter: Viering, Jentschura & Partner

(56) Entgegenhaltungen:
- WO-A1-2009/021273
- DE-A1- 19 853 013
- US-A1- 2001 020 935
- US-A1- 2005 218 218

## Beschreibung

Die Erfindung richtet sich auf die Verwendung eines Transponders in einer großtechnischen Anlage, insbesondere einem Kraftwerk. Weiterhin richtet sich die Erfindung auf ein Verfahren zur Durchführung von Instandhaltungs-, Wartungs- und/oder Reparaturarbeiten an einer Komponente und/oder an einer dieser Komponente zugeordneten Schalt- oder Messstelle einer großtechnischen Anlage, insbesondere Kraftwerk. Schließlich richtet sich die Erfindung auf eine großtechnische Anlage, insbesondere Kraftwerk, die/das mit einem darin verwendeten Transponder ausgestattet ist.

Transponder sind Funk-Kommunikationsgeräte, welche immer öfter Verwendung zur Identifizierung von verschiedensten Objekten finden. Verglichen mit herkömmlichen Strichkodemustern, die ebenfalls zur Identifizierung verwendet werden, weisen Transponder eine größere Speicherkapazität auf. Transponder sind so ausgelegt, dass Daten per Funk auf den Transponder übertragen und aus diesem ausgelesen werden können. Mittlerweile sind Transponder von verschiedenen Herstellern erhältlich und können in einem gemischten Betrieb mit anderen Geräten eingesetzt werden, da sie aufgrund ihrer Standardisierung kompatibel sind. Jeder einzelne Transponder erhält üblicherweise während seiner Herstellung eine eindeutige, unveränderliche und auslesbare Kennung in Form einer Transponder-Identifizierungsinformationseinheit, so dass keine zwei Transponder mit der gleichen Transponder-Identifizierungsinformationseinheit existieren. Durch Aufbringen eines Transponders können somit beliebige Objekte eindeutig identifiziert werden. Auf dem Transponder gespeicherte Informationen sind jedoch für den Menschen unsichtbar gespeichert und somit für das menschliche Auge nicht lesbar. DE-A-198 53 013 offenbart Hochfrequenzetiketten mit Wartungsinformation für den Einsatz in Kraftwerken. Die Etiketten haben ein Display zum Anzeigen von Warnsignalen. US-A-2005/0218218 offenbart Tags mit Anzeigeeinheiten für den Einsatz in Warenhäusern.

Aufgrund dessen wird der Einsatz von Transpondern in Kraftwerken und vielen großtechnischen Anlagen zur Unterstützung und Erleichterung verschiedenster Prozesse von Instandsetzungsarbeiten sowie Instandhaltungsmaßnahmen mit Skepsis betrachtet.

Ein Großteil der Instandsetzungsarbeiten sowie Instandhaltungsmaßnahmen von großtechnischen Anlagen wird durch einen Prozess der sogenannten Freischaltung einer Komponente vor Beginn der Arbeiten und Maßnahmen sowie der Wiederzuschaltung der Komponente nach Abschluss der Arbeiten begleitet. Unter Freischaltung wird im Allgemeinen die Herstellung einer Spannungsfreiheit an elektrischen Anlagen oder Komponenten verstanden und umfasst auch die gegebenenfalls manuelle Ausführung von Schalthandlungen an mechanischen Anlagen, wie zum Beispiel die Betätigung von Handarmaturen. Insbesondere vor Arbeitsbeginn von Instandsetzungsarbeiten sowie Instandhaltungsmaßnahmen muss die Freischaltung der Komponente fehlerfrei ausgeführt werden, - also die Komponente quasi "ausgeschaltet" sein -, damit die sichere Durchführung der Arbeiten vor Ort, d.h. an der Komponente, gewährleistet ist. Bei Wiederzuschaltung der Komponente ist sicherzustellen, dass auch parallel durchgeführte Arbeiten an dieser Komponente insgesamt beendet wurden, bevor die Komponente zugeschaltet und damit wieder in Betrieb genommen wird. Dieses Wiederzuschalten wird auch als Normalisierung der Komponente bezeichnet.

Der Prozess der Freischaltung wird seit längerem durch ein computergestütztes Verfahren unterstützt, welches die Planung und Ausführung von Freischaltvorgängen einzelner Komponenten sowie ganzer verfahrenstechnischer Systeme durch Erstellung von auf Papier ausgegebenen Freischalt-Listen mit einzelnen Freischaltschritten verwaltet. Beispielhafte Tätigkeiten zur Ausführung eines einzelnen Freischaltschritts sind das manuelle Schließen eines mechanischen Ventils oder das Stoppen eines elektrischen Motors mit anschließender Entfernung der Sicherung, um eine versehentliche Wiederzuschaltung zu verhindern. Die Freischaltschritte werden anhand des Freischaltplans in der großtechnischen Anlage durchgeführt, vor Ort durch Anbringung von Klebeetiketten, Schildern, Markierungen oder dergleichen optisch kenntlich gemacht und auf der Freischalt-Liste durch Unterschrift als durchgeführt bestätigt. Wenn alle zu einer Komponente gehörenden Freischaltschritte durchgeführt wurden und dies anhand der Freischalt-Liste überprüft wurde, kann eine Freigabe zur Durchführung von Instandsetzungsarbeiten sowie Instandhaltungsmaßnahmen an der entsprechenden Komponente unter Gewährleistung eines sicheren Arbeitsplatzes erfolgen. Die Instandsetzungsarbeiten sowie Instandhaltungsmaßnahmen selbst sind ebenfalls anhand einer Liste durchzuführen und zu bestätigen. Erst nach Überprüfung, ob alle durchzuführenden Arbeiten und Maßnahmen abgeschlossen sind, kann die entsprechende Komponente wieder zugeschaltet werden. Die Wiederzuschaltung (die sogenannte Normalisierung) der Komponente erfolgt anhand der Freischalt-Liste, die abzuarbeiten ist. Dies umfasst auch die Entfernung der angebrachten Klebeetiketten, Schilder, Markierungen oder dergleichen. Hiermit ist der Freischalvorgang abgeschlossen. In großtechnischen Anlagen ist es aber keine Seltenheit, dass mehrere Freischaltschritte an einer Komponente der Anlage gleichzeitig aktiv sind und darüber hinaus Freischaltschritte mehrerer aktiver Freischaltpläne die gleiche technische Komponente betreffen. Die Freischaltung dieser einzelnen Komponente ist in diesem Falle solange sicher zu stellen, solange auch nur eine der gleichzeitig erfolgenden Arbeiten noch andauert. Vor dem Durchführen der Normalisierung ist daher zu prüfen, ob eine oder mehrere in den Freischaltschritten einer Freischaltung aufgeführte Komponenten auch in anderen aktiven Freischaltvorgängen enthalten sind. Sollte das der Fall sein, muss dieser Schritt von der Normalisierung ausgeschlossen werden. Diese Aufgabe ist schwierig und potentiell fehleranfällig, da jeder Freischaltschritt gegen jeden Freischaltschritt aller anderen aktiven Freischaltpläne geprüft werden muss. Der Einsatz eines vorstehend angesprochenen computergestützten Verfahrens zur Konflikterkennung steigert zwar die Zuverlässigkeit der Prüfung erheblich, dehnt aber eine computergestützte Freischaltung bis an den eigentlichen Ort der Freischaltung nicht aus, so dass eine Aufhebung der Freischaltung einer Komponente trotz genauer Vorgaben aufgrund eines menschlichen Fehlers erfolgen kann.

Darüber hinaus ist es möglich, dass die Freischaltung für eine falsche Komponente aufgehoben wird, weil eine die Freischaltung anzeigende Beschriftung oder Markierung an der Komponente nicht vorhanden, unleserlich oder ungenau ist. Eine weitere Fehlerquelle, die zu einer Aufhebung der Freischaltung einer Komponente führen kann, birgt eine papierbezogene Auswertung eines Freischaltplans infolge des Übersehens noch aktiver Freischaltzustände, so dass eine einzelne Komponente fälschlicherweise normalisiert, d.h. zu- bzw. eingeschaltet, wird. Eine weitere Gefahr einer nicht erwünschten Aufhebung der Freischaltung ist dadurch gegeben, dass eine diesbezüglich an der Komponente oder an einer Schaltstelle dieser Komponente angebrachte Markierung abgefallen oder unkenntlich ist oder versehentlich entfernt wurde.

Der Erfindung liegt die Aufgabe zugrunde, eine Lösung zu schaffen, die es ermöglicht, die vorstehend genannten Nachteile sowie Gefahren zu vermeiden und eine Erhöhung der Arbeitssicherheit in einer großtechnischen Anlage, insbesondere einem Kraftwerk, zu erzielen.

Diese Aufgabe wird gelöst durch die Verwendung eines Transponders gemäß Anspruch 1.

Ebenso wird die vorstehende Aufgabe durch ein Verfahren gemäß Anspruch 12 gelöst.

Schließlich wird die vorstehende Aufgabe bei einer großtechnischen Anlage, insbesondere Kraftwerk, dadurch gelöst, dass sie/es mit einem nach einem der Ansprüche 1 bis 11 verwendeten Transponder ausgestattet ist.

Vorteilhafte und zweckmäßige Ausgestaltungen und Weiterbildungen der Erfindung ergeben sich aus den entsprechenden abhängigen Unteransprüchen.

Durch die Erfindung ist es möglich, die beispielsweise bei einer Instandsetzung und/oder Instandhaltung einer Komponente erforderlichen Arbeiten und Maßnahmen bis an die entsprechende Komponente computerunterstützt zu begleiten. Die auf dem Transponder gespeicherten Informationen, die veränderlich sind, werden darüber hinaus auf der optischen Anzeigeeinheit für das menschliche Auge optisch erfassbar, sichtbar und lesbar gemacht. Durch die optische Anzeigeeinheit ist somit ein Anbringen von Klebeetiketten, Schildern, Markierungen oder dergleichen nicht mehr notwendig, wodurch der Anbringungs- und Entfernungsaufwand entfällt und Zeit und Kosten reduziert werden. Ferner wird durch die Erfindung das Risiko einer fehlerhaften Maßnahme bei Instandsetzungsarbeiten sowie Instandhaltungsmaßnahmen an einer Komponente vermieden und damit die Arbeitssicherheit erhöht. Der Einsatz der Erfindung, wie beispielsweise beim Prozess der Freischaltung, bietet somit aufgrund einer eindeutigen Identifizierung einer Komponente, einer Speicherung von komponentenspezifischen Informationen in Form von Zustands-/Betriebsinformationseinheiten und einer optisch erfassbaren Anzeige direkt an der betreffenden Komponente von in den Zustands-/Betriebsinformationseinheiten enthaltenen Informationen neben technisch-wirtschaftlichen Vorteilen auch eine Steigerung der Zuverlässigkeit in der Ausführung und einen wesentlichen Zugewinn an Arbeits- und Produktionssicherheit.

In besonders vorteilhafter Weise lässt sich ein Transponder dann verwenden, wenn er in ein Kommunikationssystem und/oder ein Informationssystem eingebunden ist. Die Erfindung zeichnet sich daher in Ausgestaltung durch die Verwendung eines Transponders zur Ausbildung eines eine Schreib-Lese-Einheit umfassenden Kommunikationssystems aus. Eine weitere Ausgestaltung der Erfindung ist gekennzeichnet durch die Verwendung eines Transponders zur Ausbildung eines ein EDV-System umfassenden Informationssystems.

Ein solches Kommunikationssystem und/oder Informationssystem, welches einen Transponder umfasst, ist insbesondere dann sinnvoll und zweckmäßig, wenn es im Rahmen von Instandhaltungs-, Wartungs- und/oder Reparaturarbeiten an der Komponente und/oder der großtechnischen Anlage eingesetzt und verwendet wird, weshalb die Erfindung weiterhin die Verwendung des Transponders in diesem Zusammenhang vorsieht.

Um die optische Anzeigeeinheit dauerhaft einer Komponente einer großtechnischen Anlage zuzuordnen, ist es gemäß Ausgestaltung der Erfindung weiterhin zweckmäßig, wenn eine feste Anordnung des Transponders an der Komponente vorgesehen ist.

Die erfindungsgemäß vorgesehene visualisierende Darstellung eines Betriebszustandes der Komponente oder der dieser Komponente zugeordneten Schalt- oder Messstelle durch die Anzeigeeinheit des Transponders lässt sich insbesondere im Zusammenhang mit Installations-, Wartungs- und/oder Reparaturarbeiten an der Komponente und/oder der großtechnischen Anlage einsetzen. Zur Realisierung einer solchen Verwendung sieht die Erfindung in vorteilhafter Ausgestaltung vor, dass in dem Speicherelement eine Transponder-Identifizierungsinformationseinheit dauerhaft gespeichert ist und mindestens eine Zustands-/Betriebsinformationseinheit, die eine dem Transponder zugeordnete Komponente betrifft, gespeichert wird, wobei die Transponder-Identifizierungsinformationseinheit und die mindestens eine Zustands-/Betriebsinformationseinheit über das Sendeelement aus dem Speicherelement gelesen werden und die mindestens eine Zustands-/Betriebsinformationseinheit über das Empfangselement dem Speicherelement zugeführt wird und wobei der Transponder so ausgelegt ist, dass zumindest ein Teil der in den Zustands-/Betriebsinformationseinheiten enthaltenen Information auf der optischen Anzeigeeinheit dargestellt wird.

Um einer an einer Komponente einer Anlage arbeitenden Person eine möglichst konkrete und schnell erfassbare Information bezüglich des Betriebszustandes der Komponente zu geben, sieht die Erfindung in Ausgestaltung vor, dass die optische Anzeigeeinheit lediglich die Anzahl der Zustands-/Betriebsinformationseinheiten, nicht jedoch die Zustands-/Betriebsinformationseinheit selbst visualisiert anzeigt oder aufscheinen lässt. Dadurch kann beispielsweise beim Prozess der Freischaltung eindeutig erkannt werden, dass bei zwei auf der optischen Anzeigeeinheit angezeigten aktiven Freischaltungen keine Normalisierung, d.h. keine Wiederzuschaltung, der Komponente erfolgen darf, auch wenn dies der Freischaltschritt vorsieht.

Gemäß der Erfindung wird bei einer angezeigten Anzahl an Zustands-/Betriebsinformationseinheiten größer Null mittels des Steuerelements ein Warnsignal auf der optischen Anzeigeeinheit eingeblendet. Dadurch wird im Fall einer aktiven Freischaltung eine optisch erfassbare Warnmeldung ausgegeben, die beispielsweise eine Graphik sein kann, um deutlich auf die Freischaltung aufmerksam zu machen.

Im Hinblick auf einen Einsatz in großtechnischen Anlagen, insbesondere Kraftwerken, ist es von besonderem Vorteil, wenn die in dem Speicherelement speicherbaren Zustands-/Betriebsinformationseinheiten jeweils eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen, was die Erfindung ebenfalls vorsieht.

In einer besonders bevorzugten Ausführungsform der vorliegenden Erfindung ist die optische Anzeigeeinheit eine Anzeige auf Basis von elektronischer Tinte mit bistabilen Anzeigelementen. Dabei handelt es sich chemisch um Mikrokapseln, die zwei verschiedene Farbkomponenten unterschiedlicher Ladung enthalten, welche sich im elektrischen Feld ausrichten. Aufgrund der Partikelgrößen und der Viskosität des Systems erfolgt nach dem Abschalten des elektrischen Feldes keine sofortige Rückrelaxation in einen ungeordneten Ausgangszustand und somit kein Verlust der auf der Anzeigeeinheit eingeschriebenen Informationen, sondern es tritt gegebenenfalls lediglich eine Abnahme des Kontrasts ein. Dadurch ist eine Darstellung von Informationen auf der Anzeigeeinheit gewährleistet, selbst wenn der Transponder sich in einem spannungslosen Zustand befindet. Darüber hinaus ist keine Energiequelle zum Betrieb der optischen Anzeigeeinheit notwendig. Als Beispiele für elektronische Tinte sei auf die Produkte der Firmen Gyricon und E-Ink Cooperation verwiesen. Bei diesen Produkten von elektrophoretischen Anzeigeeinheiten handelt es sich um Mikrokapseln, die geladene Farbstoffpartikel enthalten. Die Einzelpartikel sind jedoch farblos und kleiner als bei anderen elektronischen Tinten. Diese elektrophoretischen Anzeigeeinheiten sind flexibel, stoßunempfindlich und druckstabil. Ferner ist durch die vergleichsweise niedrige Ansteuerungsspannung der schaltungstechnische Aufwand für die Energieversorgung begrenzt.

Alternativ können aber auch andere Anzeigetechnologien für die Anzeigeeinheit zum Einsatz kommen, wobei hier auf die bekannten Technologien FLCD (Ferroeletric Liquid Crystal Display), EASL (Electrically Adressable Smetic Liquid Display), ZBD (Zenithal Bistable Devices), CHLCD (Cholestreric Liquid Crystal Display) und OLED (Organic Light Emitting Diode) verwiesen sei, die näher in der Druckschrift WO 2006/012997 beschrieben sind.

Die auf der Anzeigeeinheit dargestellte Information kann zumindest ein alphanumerisches Zeichen und/oder zumindest eine Graphik umfassen. Beispielsweise ist durch die Darstellung von alphanumerischen Zeichen ein Ablesen von konkreten Informationen möglich, wohingegen eine Graphik zur Erhöhung der Aufmerksamkeit verwendet werden kann.

Bei dem Transponder kann es sich um einen passiven Transponder handeln, der seine benötigte Energie aus einem gesendeten Signal, das beispielsweise von einer zum Transponder kompatiblen Schreib-Lese-Einheit ausgesendet wird, bezieht. Dadurch ist es möglich, dass der Transponder seine zur Funktion benötigte Energie allein von einer derartigen Schreib-Lese-Einheit erhält und bezieht. Gegenüber einem aktiven Transponder hat dies den Vorteil, dass keine Energiequelle, wie beispielsweise eine Batterie, zum Betrieb des Transponders benötigt wird.

Insbesondere handelt es sich gemäß weiterer Ausgestaltung der Erfindung bei dem Transponder um einen RFID-Transponder. Die Abkürzung RFID steht hierbei für Radio Frequency Identification und bedeutet die Identifizierung mit Hilfe von elektromagnetischen Wellen. Der Transponder kann beispielsweise ein RFID-Transponder sein, der eine Betriebsfrequenz von 13,56 MHz aufweist, wodurch eine berührungslose Identifizierung und Lokalisierung des Transponders mit Hilfe elektromagnetischer Wellen möglich ist. Dadurch können ferner Daten auf dem Transponder berührungslos ein- und ausgelesen werden, wobei die Sende- und Empfangsquelle bis auf etwa 3 cm, vorzugsweise 2 cm bis 6 cm, an den Transponder heran gebracht werden muss. Die kurze Entfernung ist deshalb von besonderer Bedeutung, da beispielsweise mehrere Transponder, die entsprechenden Komponenten einer großtechnischen Anlage zugeordnet sind, dicht nebeneinander liegend auf einer Schalttafel angeordnet sein können und nur durch einen definierten Abstand zwischen der Sende- und Empfangsquelle und dem Transponder eine eindeutige Identifikation des Transponders möglich ist.

In Ausgestaltung der erfindungsgemäßen Verwendung des Transponders in einem Kommunikationssystem ist vorgesehen, dass in der Schreib-Lese-Einheit zumindest eine Zustands-/Betriebsinformationseinheit und zumindest eine Identifizierungsinformationseinheit gespeichert sind, wobei jeder Identifizierungsinformationseinheit wenigstens eine Zustands-/Betriebsinformationseinheit zugeordnet ist, von der Schreib-Lese-Einheit eine Transponder-Identifizierungsinformationseinheit aus dem Speicherelement des Transponders auslesbar ist und die Schreib-Lese-Einheit in Abhängigkeit von der ausgelesenen Transponder-Identifizierungsinformationseinheit zumindest eine Zustands-/Betriebsinformationseinheit von der Schreib-Leseeinheit auf den Transponder überträgt.

Hierbei ist es dann weiterhin zweckmäßig, wenn der Inhalt der wenigstens einen Zustands-/Betriebsinformationseinheit, die in der Schreib-Lese-Einheit gespeichert ist, vor der Übertragung auf den Transponder von einem Benutzer der Schreib-Lese-Einheit veränderbar ist. Insbesondere bei der Wiederzuschaltung ist dies zweckmäßig, da der Benutzer zunächst die Komponente normalisiert, d.h. wiederzuschaltet, und dies anschließend auf der Schreib-Lese-Einheit bestätigt, so dass der Status der entsprechenden Zustands-/Betriebsinformationseinheit aktualisiert werden kann.

Damit der Benutzer der Schreib-Lese-Einheit erkennt, dass er die Maßnahme auch an der richtigen Komponente durchführt, sieht die Erfindung weiterhin vor, dass die Schreib-Lese-Einheit dazu ausgelegt ist, die vom Transponder ausgelesene Transponder-Identifizierungsinformationseinheit mit der zumindest einen in der Schreib-Lese-Einheit gespeicherten Identifizierungsinformationseinheit zu vergleichen.

In weiterer Ausgestaltung der Verwendung des Transponders im Zusammenhang mit dem Kommunikationssystem ist erfindungsgemäß vorgesehen, dass bei Übereinstimmung des Inhalts der Transponder-Identifizierungsinformationseinheit und einer Identifizierungsinformationseinheit die Schreib-Lese-Einheit im Transponder gespeicherte Zustands-/Betriebsinformationseinheiten ausliest und/oder mindestens eine der Identifizierungsinformationseinheit zugeordnete, in der Schreib-Lese-Einheit gespeicherte Zustands-/Betriebsinformationseinheit von der Schreib-Lese-Einheit auf den Transponder überträgt. Dadurch kann beispielsweise bei dem Prozess der Freischaltung mittels der Schreib-Lese-Einheit festgestellt werden, ob weitere Freischaltungsschritte, die in Form der Zustands-/Betriebsinformationseinheiten auf dem Transponder gespeichert sind, für die entsprechende Komponente aktiv sind, wobei der von dem Benutzer durchzuführende Freischaltungsschritt ferner auf dem Transponder der Liste der dort gespeicherten Freischaltungsschritte in Form einer Zustands-/Betriebsinformationseinheit hinzugefügt werden kann.

Nach der Normalisierung oder Wieder-Zuschaltung einer zunächst abgeschalteten Komponente ist es notwendig, dass der entsprechende auf dem Transponder gespeicherte Freischaltschritt aus dem Speicherelement des Transponders entfernt wird. Hierzu sieht die Erfindung in Ausgestaltung vor, dass bei Übereinstimmung des Inhalts der Transponder-Identifizierungsinformationseinheit und einer Identifizierungsinformationseinheit die Schreib-Lese-Einheit ein Steuersignal an den Transponder sendet, welches das Steuerelement dazu veranlasst, eine im Speicherelement gespeicherte Zustands-/Betriebsinformationseinheit zu löschen.

Bei mehreren auf dem Transponder gespeicherten Freischaltschritten kann vorgesehen sein, dass bei einer Anzahl an vom Transponder ausgelesener Zustands-/Betriebsinformationseinheiten von größer Null die Schreib-Lese-Einheit eine Warnmeldung ausgibt. Dadurch wird der Benutzer der Schreib-Lese-Einheit konkret auf einen möglichen Konflikt von Freischaltungsschritten oder Freischaltungszuständen hingewiesen.

Die Schreib-Lese-Einheit kann ein mobiler tragbarer Computer in Form eines handgehaltenen PDAs (Personal Digital Assistant) oder eines Laptops sein. Alternativ kann die Schreib-Lese-Einheit auch als ein Mobiltelefon ausgebildet sein, welche die gleiche Funktionalität wie ein PDA oder Laptop aufweist. Dies hat den Vorteil, dass der Benutzer die Schreib-Lese-Einheit bequem mit sich führen und an unterschiedlichen Orten der großtechnischen Anlage verwenden kann. Die Speicherleistung heutiger Mobil-Computer ermöglicht eine umfängliche Informationssammlung für die unterschiedlichsten Komponenten und durchzuführenden Arbeiten. Durch die Verwendung eines derartigen mobilen Computers steigt der Komfort für den Benutzer und die Arbeitssicherheit erheblich an. Die Integrierung einer Leseeinrichtung für Transponder in einen derartigen mobilen Computer ist dabei heutzutage weitestgehend bekannt und daher einfach und kostengünstig durchzuführen.

In Ausgestaltung der erfindungsgemäßen Verwendung des Transponders in einem Informationssystem ist vorgesehen, dass zumindest eine der in einer Schreib-Lese-Einheit gespeicherten Zustands-/Betriebsinformationseinheiten von dem zentralen EDV-System aus der Schreib-Lese-Einheit ausgelesen wird und in der Schreib-Leseeinheit zu speichernde Zustands-/Betriebsinformationseinheiten von dem zentralen EDV-System auf die Schreib-Lese-Einheit übertragen werden.

Hierbei ist es dann weiterhin zweckmäßig, dass das zentrale EDV-System dazu ausgelegt ist, von der Schreib-Lese-Einheit ausgelesene Zustands-/Betriebsinformationseinheiten zu verarbeiten, insbesondere mit in dem EDV-System gespeicherten Zustands-/Betriebsinformationseinheiten zu vergleichen. Dabei werden sowohl die im EDV-System als auch die in der Schreib-Lese-Einheit gespeicherten Zustands-/Betriebsinformationseinheiten einem Datenabgleich bzw. einem bidirektionalen Synchronisationsvorgang unterzogen. Damit ist sichergestellt, dass dem EDV-System immer die aktuellsten Informationen über die Komponenten der Anlage vorliegen, so dass das EDV-System Freischaltlisten entweder in Vorbereitung geplanter Maßnahmen oder aber auch ad hoc im Falle einer Anlagenstörung erzeugen kann.

Hierbei kann vorgesehen sein, dass auf der optischen Anzeigeeinheit lediglich die Anzahl der Zustands-/Betriebsinformationseinheiten, nicht jedoch die Zustands-/Betriebsinformationseinheit selbst dargestellt wird. Damit wird einer Person eine möglichst konkrete und schnell erfassbare Information bezüglich des Betriebszustandes einer Komponente gegeben. Dadurch kann beispielsweise beim Prozess der Freischaltung eindeutig erkannt werden, dass bei zwei auf der optischen Anzeigeeinheit dargestellten aktiven Freischaltungen keine Normalisierung, d.h. keine Wiederzuschaltung, der Komponente erfolgen darf, auch wenn dies der Freischaltschritt vorsieht. Weiterhin wird die Person dazu gezwungen, wenn auf alle im Transponder gespeicherte Information zugegriffen werden soll, eine Schreib-Lese-Einheit zu verwenden.

Bei Durchführung des Verfahrens wird bei einer angezügten Anzahl an Zustands-/Betriebsinformationseinheiten größer Null mittels des Steuerelements ein Warnsignal auf der optischen Anzeigeeinheit eingeblendet. Dadurch wird beispielsweise im Fall einer aktiven Freischaltung eine optisch erfassbare Warnmeldung ausgegeben, die beispielsweise eine Graphik sein kann, um deutlich auf die Freischaltung aufmerksam zu machen.

Es kann weiterhin vorgesehen sein, dass von einer Schreib-Lese-Einheit die über das Empfangselement empfangene und in dem Speicherelement gespeicherte Zustands-/Betriebsinformationseinheit in Form eines Signals übertragen wird und die Schreib-Lese-Einheit zur Übertragung des Signals in den frequenzabhängigen Empfangs-/Sendebereich des Transponders, vorzugsweise bis auf 3 bis 6 cm an den Transponder heran, gebracht wird. Dadurch ist eine eindeutige Identifizierung des Transponders und ein berührungsloses Ein- und Auslesen von auf dem Transponder gespeicherten Daten möglich.

Weiterhin wird zweckmäßiger Weise vorgesehen, dass vor dem Übertragen des Signals von der Schreib-Lese-Einheit die dauerhaft im Transponder gespeicherte Transponder-Identifizierungsinformationseinheit aus diesem ausgelesen wird und die Transponder-Identifizierungsinformationseinheit mit einer in der Schreib-Lese-Einheit gespeicherten Identifizierungsinformationseinheit verglichen wird. Dadurch wird sichergestellt, dass die auf den Transponder zu übertragende Zustands-/Betriebsinformationseinheit auch auf den richtigen Transponder übertragen wird.

Hierbei können von der Schreib-Lese-Einheit bei Übereinstimmung von Transponder-Identifizierungsinformationseinheit und Identifizierungsinformationseinheit im Transponder gespeicherte Zustands-/Betriebsinformationseinheiten ausgelesen werden und kann bei einer Anzahl an ausgelesenen Zustands-/Betriebsinformationseinheiten von größer Null eine Warnmeldung von der Schreib-Lese-Einheit ausgegeben werden. Dadurch wird beispielsweise im Fall einer aktiven Freischaltung dem Benutzer eine wahrnehmbare und gegebenenfalls optisch erfassbare Warnmeldung angezeigt, um die Aufmerksamkeit des Benutzers hinsichtlich des festgestellten Konflikts zu erhöhen.

Bei Übereinstimmung von Transponder-Identifizierungsinformationseinheit und Identifizierungsinformationseinheit kann eine in der Schreib-Lese-Einheit gespeicherte und der Identifizierungsinformationseinheit zugeordnete Zustands-/Betriebsinformationseinheit einem Verarbeitungsschritt unterzogen werden, bei dem der Status dieser Zustands-/Betriebsinformationseinheit geändert wird, bevor ein die geänderte Zustands-/Betriebsinformationseinheit beinhaltendes Signal an den Transponder übertragen wird. Insbesondere bei der Wiederzuschaltung ist dies erforderlich, da der Benutzer zunächst die Komponente normalisiert, d.h. wiederzuschaltet, und dies anschließend auf der Schreib-Lese-Einheit bestätigt, so dass der Status der entsprechenden Zustands-/Betriebsinformationseinheit aktualisiert werden kann.

Nach der Normalisierung, d.h. Zuschaltung, einer Komponente ist es notwendig, dass der entsprechende auf dem Transponder gespeicherte Freischaltschritt aus dem Speicherelement des Transponders entfernt wird. Hierzu wird bei Übereinstimmung von Transponder-Identifizierungsinformationseinheit und Identifizierungsinformationseinheit von der Schreib-Lese-Einheit ein Steuersignal an den Transponder gesendet, durch welches eine im Speicherelement gespeicherte Zustands-/Betriebsinformationseinheit von der Steuereinheit gelöscht wird.

Zweckmäßiger Weise wird nach dem Speichern der gesendeten Zustands-/Betriebsinformationseinheit von der optischen Anzeige lediglich die aktuelle Anzahl an im Transponder gespeicherter Zustands-/Betriebsinformationseinheiten, nicht jedoch die Zustands-/Betriebsinformationseinheit selbst optisch angezeigt. Dadurch kann beispielsweise beim Prozess der Freischaltung eindeutig angezeigt werden, dass bei zwei auf der optischen Anzeigeeinheit dargestellten aktiven Freischaltungen keine Normalisierung, d.h. keine Wiederzuschaltung, der Komponente erfolgen darf, auch wenn dies der gerade aktuell bearbeitete Freischaltschritt vorsieht.

Damit überhaupt Zustands-/Betriebsinformationseinheiten und damit Informationen auf den Transponder übertragbar sind, wird vor Übertragung des Signals an den Transponder von einem zentralen EDV-System zumindest eine Zustands-/Betriebsinformationseinheit an die Schreib-Lese-Einheit übertragen.

Nach der Übertragung des Signals an den Transponder kann die geänderte Zustands-/Betriebsinformationseinheit, die in der Schreib-Lese-Einheit gespeichert ist, von dem zentralen EDV-System ausgelesen wird. Damit wird eine zentrale Daten- und Informationshaltung über den Betriebszustand der einzelnen Komponenten realisiert.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen unter Bezugnahme auf die zugehörigen Zeichnungen näher erläutert. Es zeigt:
- Fig. 1: eine schematische Darstellung eines Informationssystems, bestehend aus Transponder, Schreib-Lese-Einheit und EDV-System,
- Fig. 2: eine Darstellung eines Transponders nach dessen Initialisierung,
- Fig. 3: eine Darstellung eines Transponders, auf dessen optischer Anzeigeeinheit eine Freischaltung einer Komponente angezeigt wird,
- Fig. 4: eine Darstellung eines Transponders, auf dessen optischer Anzeigeeinheit zwei Freischaltungen einer Komponente angezeigt werden,
- Fig. 5: eine Darstellung eines Transponders, auf dessen optischer Anzeigeeinheit ein Zeitpunkt einer zuletzt durchgeführten Wartungsmaßnahme angezeigt wird,
- Fig. 6: eine Darstellung eines Transponders, auf dessen optischer Anzeigeeinheit ein Zeitpunkt einer zuletzt durchgeführten Abnahmeprüfung angezeigt wird, und
- Fig. 7: eine Darstellung eines Transponders, auf dessen optischer Anzeigeeinheit ein Zeitpunkt einer zuletzt durchgeführten Messprotokollierung angezeigt wird.

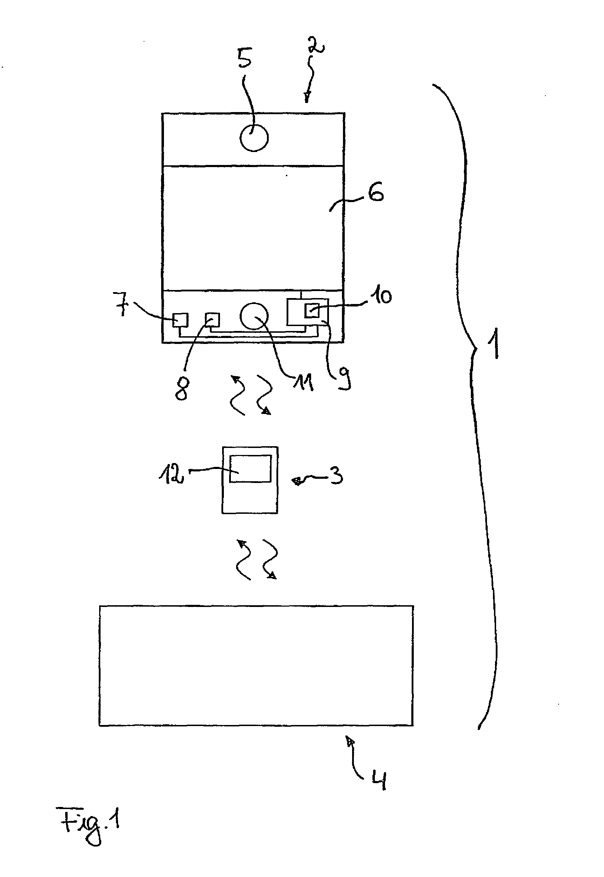

Die Fig. 1 zeigt schematisch ein in seiner Gesamtheit mit Bezugsziffer 1 bezeichnetes Informationssystem, welches einen Transponder 2, eine mobile Schreib-Lese-Einheit 3 und ein EDV-System 4 umfasst. Die sich aus der Darstellung ergebenden Größenverhältnisse zwischen Transponder 2, mobiler Schreib-Lese-Einheit 3 und EDV-System 4 entsprechen nicht notwendigerweise den wirklichen Relationen.

Der Transponder 2 weist eine in Form eines Lochs ausgebildete Öffnung 5 auf, durch die ein Befestigungselement hindurch steckbar ist, um den Transponder 2 an einer Komponente einer großtechnischen Anlage dauerhaft anbringen zu können. Neben mechanischen Befestigungsmöglichkeiten, die durch die Öffnung 5 gegeben ist, kann der Transponder 2 auch mit einer Seitenfläche, die einer optischen Anzeigeeinheit 6 des Transponders 2 abgewandt ist, auf und/oder an der Komponente der Anlage mittels eines Klebemittels oder dergleichen angebracht werden. Insbesondere soll der Transponder im Zusammenhang mit einer großtechnischen Kraftwerksanlage Verwendung finden.

Der in Form eines dünnen Plättchens ausgebildete Transponder 2 (das Plättchen kann starr oder biegsam ausgestaltet sein) weist ferner ein Empfangselement 7, ein Sendeelement 8 und ein Steuerelement 9 auf. Das Steuerelement 9 ist mit dem Empfangselement 7, dem Sendeelement 8 und der optischen Anzeigeeinheit 6 verbunden und umfasst ein Speicherelement 10. In dem Speicherelement 10 ist eine bei der Herstellung des Transponders 2 erzeugte einmalige Kennung in Form einer Transponder-Identifizierungsinformationseinheit, die eine Nummer sein kann, dauerhaft gespeichert. Neben der Transponder-Identifizierungsinformationseinheit sind in dem Speicherelement 10 mehrere Zustands-/Betriebsinformationseinheiten, die eine dem Transponder 2 zugeordnete Komponente betreffen, speicherbar. Dabei umfasst jede Zustands-/Betriebsinformationseinheit der entsprechenden Komponente zugewiesene Informationen, wie beispielsweise deren Komponentenbezeichnung (Pumpenaggregat), deren Lage innerhalb der großtechnischen Anlage, eine Kurzbeschreibung in Form einer Bedienungsanleitung, technischen Daten und dergleichen. Diese Informationen werden auch als Stammdaten der Komponente bezeichnet. Darüber hinaus kann die jeweilige Zustands-/Betriebsinformationseinheit eine Information über eine an der Komponente durchzuführende Maßnahme enthalten und/oder eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen.

Über das Sendeelement 8 werden die Transponder-Identifizierungsinformationseinheit und die Zustands-/Betriebsinformationseinheiten aus dem Speicherelement 10 von einem zum Transponder 2 kompatiblen Gerät gelesen. Ferner werden Zustands-/Betriebsinformationseinheiten über das Empfangselement 7 dem Speicherelement 10 zugeführt.

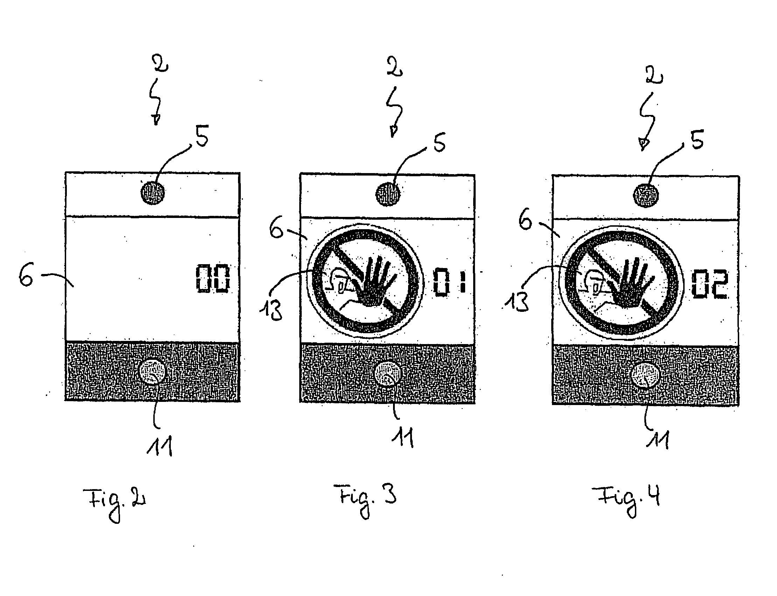

Die optische Anzeigeeinheit 6 des Transponders 2 ist eine Anzeige auf Basis von elektronischer Tinte mit bistabilen Anzeigeelementen, wobei die darauf dargestellte Information oder die dargestellten Informationen alphanumerische Zeichen und eine Graphik umfassen, wie in Fig. 3 zu sehen ist. Die optische Anzeigeeinheit 6 visualisiert somit einen Teil der in den Zustands-/Betriebsinformationseinheiten enthaltenen Informationen. Alternativ kann die optische Anzeigeeinheit 2 auf Basis einer anderen Technologie als die der elektronischen Tinte ausgeführt sein. Der in dieser Ausführungsform dargestellte Transponder 2 weist ferner eine Ausnehmung 11 auf.

Ein Kommunikationsvorgang des Transponders 2 mit einem kompatiblen Gerät in Form einer Schreib-Leseeinheit 3 beginnt dann, wenn ein Schreib-Lese-Stift dieses Geräts bis auf unter 3 cm an den Transponder 2 heran gebracht wird. Die Ausnehmung 11 dient dabei lediglich als Hilfe, um den Schreib-Lese-Stift aufsetzen zu können, so dass eine Kommunikation zwischen dem Transponder 2 und dem kompatiblen Gerät 3 gewährleistet ist.

Alternativ kann die Ausnehmung auch bei einer kapazitiven Kopplung zwischen Transponder 2 und dem kompatiblen Gerät dazu verwendet werden, mittels Elektroden der Schaltung des Transponders 2 elektrische Energie aus dem elektrischen Feld des kompatiblen Geräts zuzuführen.

Die vorstehend genannten Elemente des Transponders 2 stellen die Basiselemente für seine Funktion dar und sind nicht abschließend zu verstehen. Optional kann der Transponder 2 zusätzlich einen Mirkoprozessor aufweisen, so dass der Transponder 2 programmierbar ist und empfangene Zustands-/Betriebsinformationseinheiten auswerten und verarbeiten kann. Der in diesem Ausführungsbeispiel verwendete Transponder 2 ist ein passiver Transponder, der seine benötigte Energie aus einem gesendeten Signal bezieht. Alternativ kann aber auch ein aktiver Transponder verwendet werden, der allerdings eine eigene Energiequelle (z.B. eine Batterie oder eine Solarzelle) zum Betrieb benötigt. Hinsichtlich einer weiteren Alternative kann der Transponder 2 auch ein RFID-Transponder sein, der eine Betriebsfrequenz von 13,56 MHz aufweist, wodurch eine berührungslose Identifizierung und Lokalisierung des Transponders mit Hilfe elektromagnetischer Wellen möglich ist.

Als ein zu dem Transponder 2 kompatibles Gerät kommen verschiedenste Schreib-Lese-Einheiten 3 in Frage, die als mobile tragbare Computer in Form von handgehaltenen PDAs oder Laptops ausgebildet sind. Diese Geräte sind im Allgemeinen aufgrund ihrer Standardisierung zu einem wie hier beschriebenen Transponder 2 kompatibel. Die als ein mobiler Computer ausgebildete Schreib-Lese-Einheit 3 weist eine Anzeigevorrichtung 12 zur visualisierenden Darstellung von Informationen oder zur Anzeige der Zustands-/Betriebsinformationseinheiten auf und wird von einem Benutzer bei durchzuführenden Maßnahmen an Komponenten einer großtechnischen Anlage mit sich geführt. Mittels eines auf der Schreib-Lese-Einheit 3 ausführbaren Computerprogramms können auf der Schreib-Lese-Einheit 3 gespeicherte Zustands-/Betriebsinformationseinheiten verwaltet und deren Status von dem Benutzer der Schreib-Lese-Einheit 3 verändert werden.

Zwischen dem Transponder 2 und der Schreib-Lese-Einheit 3 findet ein wie durch die Pfeile in Fig. 1 angedeuteter Informationsaustausch statt, so dass beide ein Kommunikationssystem bilden. Zum Informationsaustausch mit dem Transponder 2 ist zumindest eine Zustands-/Betriebsinformationseinheit und zumindest eine den Transponder 2 identifizierende und/oder verifizierende Identifizierungsinformationseinheit in der Schreib-Lese-Einheit 3 gespeichert, wobei jeder Identifizierungsinformationseinheit wenigstens eine Zustands-/Betriebsinformationseinheit einer Komponente zugeordnet ist. Zum Informationsaustausch oder Kommunikation mit dem Transponder 2 wird von der Schreib-Lese-Einheit 3 die Transponder-Identifizierungsinformationseinheit aus dem Speicherelement 10 des Transponders 2 ausgelesen. Im Fall, dass die Transponder-Identifizierungsinformationseinheit und die Identifizierungsinformationseinheit übereinstimmen, wird von der Schreib-Lese-Einheit 3 die zur Identifizierungsinformationseinheit zugehörige Zustands-/Betriebsinformationseinheit auf den Transponder 2 übertragen.

Der vorstehend verwendete Begriff "Informations-/Betriebsinformationseinheit" umfasst Information(en) hinsichtlich eines aktiven oder zu aktivierenden Zu- oder Abschaltzustands einer zugeordneten Komponente. Der Begriff "Transponder-Identifizierungsinformationseinheit" umfasst ein auf dem Transponder abgespeichertes, den Transponder eindeutig identifizierendes Transponder-Identifizierungs "gebilde", vorzugsweise in Form einer alphanumerischen oder binären Kombination.

Der Begriff "Identifizierungsinformationseinheit" umfasst ein solches auf der Schreib-Lese-Einheit 3 abgespeichertes Transponder-Identifikations"gebilde".

Vor der Übertragung auf den Transponder 2 kann ein Benutzer den Inhalt der in der Lese-Schreib-Einheit 3 gespeicherten Zustands-/Betriebsinformationseinheit verändern, so dass der Transponder 2 eine aktualisierte Zustands-/Betriebsinformationseinheit empfängt. Die Aktualisierung bezieht sich dabei auf eine an der Komponente durchgeführte Maßnahme, die beispielsweise eine Freischaltung oder eine Wiederzuschaltung sein kann. Die Schreib-Lese-Einheit 3 liest ferner bei Übereinstimmung des Inhalts der Transponder-Identifizierungsinformationseinheit und der Identifizierungsinformationseinheit auch die im Transponder gespeicherte Zustands--/Betriebsinformationseinheiten aus. Im Fall eines Freischaltungsvorgangs ist es möglich, dass die Anzahl der ausgelesenen Zustands-/Betriebsinformationseinheiten größer Null ist, was bedeutet, dass für die vorliegende Komponente mehrere Freischaltungen vorliegen. In diesem Fall erhält der Benutzer der Schreib-Lese-Einrichtung 3 eine Warnmeldung, die ihn auf diesen Konflikt aufmerksam macht und ihm zu verstehen gibt, dass die Komponente auf keinen Fall wieder zugeschaltet werden darf. Zusätzlich sendet in diesem Fall die Schreib-Lese-Einheit 3 ein Steuersignal an den Transponder 2, welches das Steuerelement 9 dazu veranlasst, die im Speicherelement 10 gespeicherte Zustands-/Betriebsinformationseinheit, die zu der Identifizierungsinformationseinheit zugehörig ist, zu löschen.

Damit auf der Schreib-Lese-Einheit 3 überhaupt Zustands-/Betriebsinformationseinheiten, die auf den Transponder 2 zu übertragen sind, vorliegen, werden im Vorfeld der an einer Komponente durchzuführenden Maßnahme und der damit verbundene Informationsaustausch zwischen Transponder 2 und Schreib-Lese-Einheit 3 entsprechende Zustands-/Betriebsinformationseinheiten von dem zentralen EDV-System 4 auf die Schreib-Lese-Einheit 3 übertragen. Innerhalb des zentralen EDV-Systems 4 ist der Schaltplan der großtechnischen Anlage in einer Datenbank hinterlegt, der von einem Computerprogramm verwaltet wird. In der Datenbank des Systems ist der Freischaltort der Komponente mit der eindeutigen Identifizierungsinformationseinheit des Transponders 2 verknüpft. Das zentrale EDV-System 4 übernimmt beispielsweise bei einem Prozess der Freischaltung die Planung von Freischaltvorgängen einzelner Komponenten sowie ganzer verfahrenstechnischer Systeme durch Erstellung von Freischalt-Listen mit einzelnen Freischaltschritten. Die Freischaltschritte entsprechen den Zustands-/Betriebsinformationseinheiten, die nach der Planung und Erstellung der Freischalt-Liste auf die Schreib-Lese-Einheit 3 übertragen werden. Nach Abarbeitung der Liste werden die in der Schreib-Lese-Einheit gespeicherten Zustands-/Betriebsinformationseinheiten vom zentralen EDV-System 4 ausgelesen und verarbeitet, wobei die ausgelesenen Zustands-/Betriebsinformationseinheiten mit in dem EDV-System 4 gespeicherten Zustands-/Betriebsinformationseinheiten verglichen werden. Nicht durchgeführte Maßnahmen werden dabei von dem EDV-System 4 erkannt und zur erneuten Durchführung in eine entsprechende Liste aufgenommen und zu einem späteren Zeitpunkt abgearbeitet.

Nachstehend wird exemplarisch die Ausstattung einer Komponente eines Kraftwerks einer großtechnischen Anlage sowie ein exemplarischer Freischalt- und Zuschaltprozess beschrieben, bei dem der Transponder 2, das aus Transponder 2 und Schreib-Lese-Einheit 3 bestehende Kommunikationssystem sowie das aus Transponder 2, Schreib-Lese-Einheit 3 und zentralem EDV-System 4 bestehende Informationssystem 1 verwendet werden. Ein solcher Freischalt- und Zuschaltprozess wird in Kraftwerken im Rahmen von Wartungs-, Instandhaltungs-und/oder Reparaturarbeiten durchgeführt. Die so genannte Freischaltung dient dazu, die Komponenten oder Aggregate auszuschalten und "gefahrlos" zu machen, so dass an ihnen oder an nachfolgenden oder zugeordneten Komponenten ohne Gefährdung gearbeitet werden kann. Nach Abschluss der Arbeiten werden die Komponenten wieder zu- oder angeschaltet. Dieser Vorgang wird Normalisierung genannt.

Vor dem Einsatz des Informationssystems 1 in einer großtechnischen Anlage, wie insbesondere einem Kraftwerk, wird im Rahmen einer Vorbereitungsmaßnahme an sämtlichen Komponenten der großtechnischen Anlage, die möglicherweise im Rahmen einer Freischaltung betätigt werden sollen, jeweils ein Transponder 2 mit einer optischen Anzeige 5 fest angebracht. Mithilfe der mobilen Schreib-Lese-Einheit 3, auf der eine EDV-Anwendung zur Unterstützung des Verfahrens einer Freischaltung durchgeführt wird, wird eine Transponder-Identifizierungsinformationseinheit des Transponders 2 ausgelesen und diese eindeutige und unveränderliche Identifizierungskennung anderen Informationen dieser Komponente, wie beispielsweise einer Komponentenbezeichnung (Pumpenaggregat), einer Ortsbezeichnung in der Anlage, einer Kurzbeschreibung in Form einer Bedienungsanleitung, technischen Daten und dergleichen, die auch Stammdaten genannt werden, zugeordnet. Bei dieser Vorbereitungsmaßnahme wird zudem die Datenhaltung auf dem Transponder 2 initialisiert, in dem eine Liste von Zustands-/Betriebsinformationseinheiten gelöscht wird. Die Zustands-/Betriebsinformationseinheiten enthalten jeweils eine Identifizierungsinformationseinheit, die beispielsweise eine Nummer ist, und eine Information, die beispielsweise einen Zu- oder Abschaltungszustand der Komponente angibt. Darüber hinaus können die Zustands-/Betriebsinformationseinheiten auch die Stammdaten der entsprechenden Komponente beinhalten. Den Abschluss der Initialisierung stellt der Transponder 2 durch Anzeige der Ziffern "00" auf der optischen Anzeigeeinheit 5 lesbar dar, wie dies in Fig. 2 dargestellt ist. Durch die Ziffern "00" wird dem Personal der großtechnischen Anlage angezeigt, dass diese Komponente zugeschaltet ist, d.h. dass keine Freischaltung der Komponente vorliegt.

Nach Abschluss der Vorbereitungsmaßnahme und damit der Zuordnung der jeweiligen Transponder-Identifizierungsinformationseinheiten zu den entsprechenden Komponenten werden die jeweiligen Informationseinheiten von der mobilen Schreib-Lese-Einheit 3 zum zentralen EDV-System 4 übertragen und dort gespeichert.

Als Ergebnis der Vorbereitungsmaßnahme wird im zentralen EDV-System 4 ein Anlagenplan erstellt, bei dem jeder Komponente eine eindeutige Identifizierungsinformationseinheit und/oder eine Transponder-Identifizierungsinformationseinheit zugewiesen ist.

Ein durchzuführender Freischaltungsprozess einer Komponente kann grob in drei Abschnitte unterteilt werden. In einem ersten Schritt wird ein sogenannter Freischaltplan erstellt, dem in einem zweiten Schritt die Durchführung der Freischaltung folgt, worauf hin in einem abschließenden dritten Schritt die Wiederzuschaltung oder Normalisierung folgt. Bei der durchzuführenden Freischaltung einer Komponente der großtechnischen Anlage, im Ausführungsbeispiel eines Kraftwerks, wird mittels des EDV-Systems 4 ein Freischaltplan und/oder eine Freischaltliste mit einem oder mehreren Freischaltschritten erzeugt, wobei jedem einzelnen Freischaltschritt eine eindeutige Identifizierungsinformationseinheit und Transponder-Identifizierungsinformationseinheit zugewiesen ist. Jeder einzelne Freischaltschritt wird als eine Zustands-/Betriebsinformationseinheit im EDV-System 4 erzeugt und in die Freischaltliste aufgenommen.

Zur Unterstützung des Prozesses der Freischaltung wird die Freischaltungsliste mit den im EDV-System 4 erzeugten Zustands-/Betriebsinformationseinheiten, die jeweils die Identifizierungsinformationseinheit, die zur Identifizierungsinformationseinheit zugehörigen Stammdaten einer Komponente sowie die durchzuführende Maßnahme an der Komponente beinhalten, auf zumindest eine mobile Schreib-Lese-Einheit 3 übertragen. Eine mögliche Aufteilung der Freischaltungsliste kann hierbei nach unterschiedlichen Gesichtspunkten erfolgen. Üblich ist eine Trennung von mechanischer und elektrischer Freischaltung, weil für diese beiden Maßnahmen Personen mit unterschiedlichen Qualifikationen erforderlich sind und meist auch nur von diesen durchgeführt werden darf.

Auf der Anzeige 12 der mobilen Schreib-Lese-Einheit 3 wird die Freischaltliste mit allen durchzuführenden Freischaltschritten angezeigt, die einer Person zugewiesen sind. In geeigneter Weise, beispielsweise durch einen Farbumschlag oder ein Symbol, werden bereits durchgeführte Freischaltschritte auf der Anzeige 12 der Schreib-Lese-Einheit 3 kenntlich gemacht. Darüber hinaus werden auf der Anzeige 12 die Stammdaten einer jeweiligen Komponente angezeigt oder können durch Benutzerinteraktion dargestellt werden. Eine Onlineverbindung der mobilen Schreib-Lese-Einheit 3 mit dem zentralen EDV-System 4 ist nicht erforderlich, kann aber optional, beispielsweise per WLAN, erfolgen. Da ein Empfang in großtechnischen Anlagen jedoch nicht überall sicher gestellt werden kann, ist in erster Linie ein autarker Betrieb (ohne Onlineverbindung) der mobilen Schreib-Lese-Einheit 3 vorgesehen.

Bei Erreichen einer freizuschaltenden Komponente der großtechnischen Anlage hält der Benutzer die Schreib-Lese-Einheit 3 in die Nähe des Transponders 2, der an der Komponente oder in deren Nähe oder aber an einer diesbezüglichen Schaltstelle befestigt ist. Durch Vergleich der aus dem Transponder 2 ausgelesenen Transponder-Identifizierungsinformationseinheit mit den in der Freischaltliste gespeicherten Identifizierungsinformationseinheiten, denen jeweils ein entsprechender Freischaltschritt zugeordnet ist, wird automatisch der korrekte Freischaltschritt aufgeblendet oder im Fehlerfalle eine Meldung angezeigt, wenn diese Komponente zu keinem Freischaltschritt gehört.

Nachdem sich der Benutzer der Schreib-Lese-Einheit 3 auf diese Weise überzeugt hat, dass er an der richtigen Komponente ist, schaltet er diese frei. Die Freischaltung der Komponente kann beispielsweise durch Drücken eines Schalters oder Drehen einer Kurbel erfolgen. Die Durchführung der Freischaltmaßnahme bestätigt der Benutzer durch Betätigen einer Schaltfläche auf der mobilen Schreib-Lese-Einheit 3. Anschließend wird die Schreib-Lese-Einheit 3 an den Transponder 2 der Komponente herangebracht, so dass die Schreib-Lese-Einheit 3 eine Zustands-/Betriebsinformationseinheit (beispielsweise die Identifikationsnummer des aktuell abzuarbeitenden oder zu initialisierenden Freischaltungsplans) auf den Transponder 2 überträgt und die Zustands-/Betriebsinformationseinheit gegebenenfalls in eine dortige Liste der im Transponder 2 gespeicherten Freischaltplannummern abspeichert. Der Transponder 2 legt diese Zustands-/Betriebsinformationseinheit dauerhaft in seinem Speicherelement 10 ab. Als Reaktion auf die Datenübertragung blendet der Transponder 2 mit der optischen Anzeigeeinheit 5 zudem ein auffälliges Symbol 13 auf und zeigt die Anzahl gleichzeitig aktiver Freischaltvorgänge als Zahl an. Demzufolge wird in Fig. 3 ein aktiver Freischaltvorgang angezeigt, wohingegen in Fig. 4 zwei aktive Schaltvorgänge angezeigt werden. Diese Informationen sind somit jedem optisch zugänglich und es ist hierfür keine Schreib-Lese-Einheit 3 notwendig. Eine Darstellung der Freischaltplannummern auf der Anzeige wird in der Regel nicht erfolgen, so dass ein Auslesen dieser Liste weiterhin nur über die Schreib-Lese-Einheit 3 möglich ist.

Nach Abschluss der Freischaltungen werden die Bestätigungen von der mobilen Schreib-Lese-Einheit 3 an das zentrale EDV-System 4 übertragen. Eine komplette Abarbeitung der auf der Schreib-Lese-Einheit 3 gespeicherten Freischaltliste ist wünschenswert, aber nicht notwendig. Das zentrale EDV-System 4 übernimmt die Bestätigungen der Freischaltschritte von mehreren mobilen Schreib-Lese-Einheiten 3 und stellt den zusammengeführten Statuts der Freischaltvorgänge dar. Noch nicht erfolgte Freischaltschritte werden somit zuverlässig erkannt und können erneut einer mobilen Schreib-Lese-Einheit 3 zugewiesen werden. Erst wenn das zentrale EDV-System 4 die Durchführung aller Freischaltschritte eines Freischaltplans meldet, kann eine Arbeitsfreigabe für die Komponente erteilt werden.

Sobald die Arbeiten, die zu einem Freischaltplan gehören, als beendet gemeldet werden, kann der Freischaltplan im EDV-System 4 zur Normalisierung ausgewählt werden und in gleicher Weise wie für die Freischaltung auf ein oder mehrere mobile Schreib-Lese-Einheiten 3 übertragen werden.

Bei Erreichen der zu normalisierenden Komponente wird die Schreib-Lese-Einheit 3 in die Nähe des Transponders 2 gebracht, der an der Komponente befestigt ist. Bei diesem Vorgang liest die mobile Schreib-Lese-Einheit 3 die Transponder-Identifizierungsinformationseinheit aus dem Speicherelement 10 des Transponders 2 und die Liste der Freischaltplannummern, die auf dem Transponder 2 in Form von Zustands-/Betriebsinformationseinheiten gespeichert sind. Durch Vergleich der ausgelesenen Transponder-Identifizierungsinformationseinheit mit den bei den Freischaltschritten gespeicherten Identifizierungsinformationseinheiten wird der korrekte Freischaltschritt mittels einer auf der Schreib-Lese-Einheit 3 installierten EDV-Anwendung herausgesucht und angezeigt. Im Fehlerfalle, d.h. wenn diese Komponente zu keinem Freischaltschritt gehört, wird eine Meldung auf der Anzeige 12 der Schreib-Lese-Einheit 3 angezeigt. Die Anwendung auf der mobilen Schreib-Lese-Einheit 3 überprüft im nächsten Schritt, ob die Liste der Freischaltplannummern ausschließlich die Nummer des zu normalisierenden Freischaltplanes enthält. Sollte dies nicht der Fall sein, wird eine auffällige Meldung 13 auf der Anzeige 12 angezeigt, die darüber informiert, dass noch andere Freischaltungen aktiv sind und eine Normalisierung nicht erfolgen darf.

Nachdem sichergestellt ist, dass es sich um die richtige Komponente handelt und die Normalisierung auch durchgeführt werden darf, wird die Komponente wieder in den normalen Zustand gebracht, d.h. sie wird beispielsweise durch Drücken eines Schalters oder Drehen einer Kurbel zugeschaltet. Die Durchführung der Maßnahme wird durch Betätigen einer Schaltfläche auf der mobilen Schreib-Lese-Einheit 3 und anschließendes Anhalten der Schreib-Lese-Einheit 3 an den Transponder 2 der Komponente bestätigt. Bei diesem Vorgang löscht die Schreib-Lese-Einheit 3 die entsprechende Zustands-/Betriebsinformationseinheit, die im Speicherelement 10 gespeicherte ist. Der Transponder 2 legt diese Informationen dauerhaft in seinem Speicherelement 10 ab. Als Reaktion auf die Datenübertragung aktualisiert der Transponder 2 die optische Anzeigeeinheit 6. Das auffällige Symbol 13 wird weiterhin angezeigt, wenn weitere Freischaltungen aktiv sind, ansonsten verschwindet es. Die Anzahl gleichzeitig aktiver Freischaltvorgänge wird als Zahl aktualisiert und gibt hierdurch dem Anwender eine visuelle Rückmeldung. Der aktuelle Zustand der Freischaltungen ist somit weiterhin jedem optisch zugänglich. Ein Schreib-Lese-Gerät 3 ist hierzu nicht erforderlich, um die in den Figuren 3 und 4 dargestellte Anzahl von aktiven Freischaltzuständen zu erkennen.

Nach Abschluss der Normalisierungen werden die Bestätigungen von der mobilen Schreib-Lese-Einheit 3 an das zentrale EDV-System 4 übertragen. Analog zum Vorgehen bei der Freischaltung verfolgt das EDV-System 4 die durchgeführten Normalisierungen und signalisiert, welche Normalisierungen noch ausstehen bzw. für welche Freischaltvorgänge die Normalisierung komplett abgeschlossen wurde.

Die Erfindung ist aber nicht nur bei einem wie vorstehend beschriebenen Freischaltungsprozess von Komponenten einer großtechnischen Anlage, wie einem Kraftwerk, einsetzbar, sondern kann auch für andere optisch anzuzeigende Maßnahmen eingesetzt werden, was eine Steigerung der Zuverlässigkeit in der Ausführung und einen wesentlichen Zugewinn an Arbeits-und Produktionssicherheit gewährleistet. Der Transponder 2 ist dabei wiederum an der Komponente selbst oder an einem für die Maßnahme geeigneten Ort angebracht.

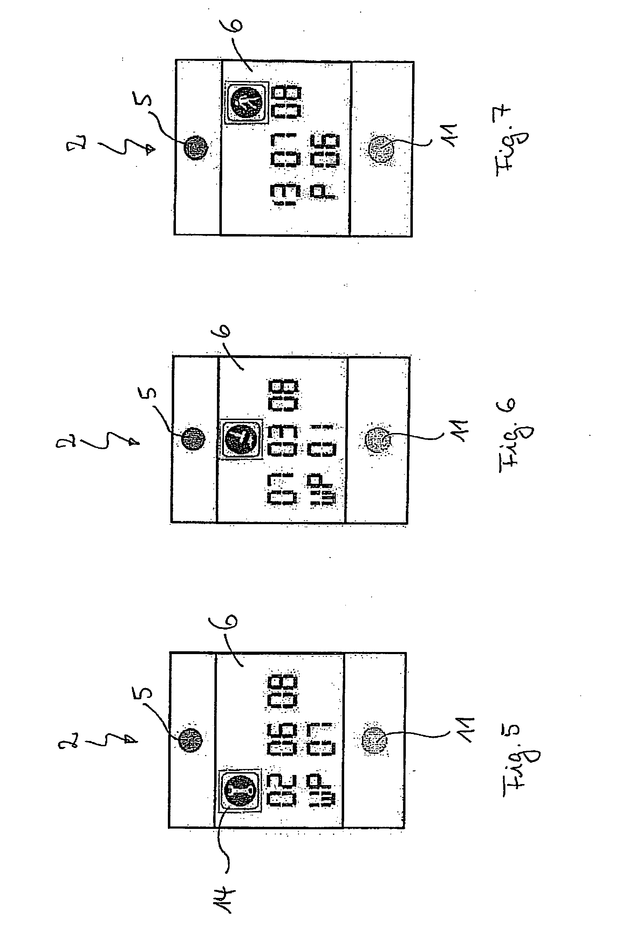

In Fig. 5 zeigt die optische Anzeigeeinheit 6 des Transponders 2 eine zuletzt durchgeführte Wartung einer Komponente einer großtechnischen Anlage an. Dabei wird auf der optischen Anzeige 6 ein Symbol 14 eingeblendet, welches für eine Wartungsmaßnahme steht. Die weitere auf der optischen Anzeige 6 dargestellte Information gibt das Datum der zuletzt durchgeführten Wartungsmaßnahme wieder. Äquivalent zum Prozess der Freischaltung wird von dem zentralen EDV-System 4 ein Wartungsplan erstellt und abgearbeitet. Nach Abarbeitung wird dies auf der Schreib-Lese-Einheit 3 gespeichert, in dem die entsprechende Zustands-/Betriebsinformationseinheit vom Benutzer der Schreib-Lese-Einheit 3 geändert wird. Diese geänderte Zustands-/Betriebsinformationseinheit wird nach Abschluss der Wartungsarbeiten an den Transponder 2 übertragen, der dann das eingeblendete Datum der zuletzt durchgeführten Wartung aktualisiert. Als weitere Information ist in Fig. 5 der entsprechende Wartungsplan "WP 07" auf der optischen Anzeigeeinheit 6 dargestellt, da zur Wartung einer Komponente oder Maschine einer großtechnischen Anlage mehrere Wartungspläne gehören. In dem dargestellten Fall wurde demnach zuletzt am 02.06.2008 eine Wartung nach Wartungsplan "WP 07" durchgeführt.

In Fig. 6 zeigt die optische Anzeigeeinheit 6 des Transponders 2 eine zuletzt durchgeführte behördliche Prüfung (TÜV) der Komponente an, wohingegen in Fig. 7 eine zuletzt durchgeführte Messwertaufnahme von der Komponente angezeigt wird. Eine Änderung der in Fig. 6 und Fig. 7 dargestellten Informationen erfolgt in identischer Weise wie bei der zuvor beschriebenen Maßnahme einer zuletzt durchgeführten Wartung, so dass auf die diesbezüglich vorstehenden Ausführungen verwiesen wird.

## Patentansprüche

1. Verwendung eines Transponders (2), der ein Empfangselement (7), ein Sendeelement (8), eine optische Anzeigeeinheit (6) und ein Speicherelement (10) zur Speicherung mindestens einer Zustands-/Betriebsinformationseinheit sowie ein wirkmäßig mit diesen verbundenes Steuerelement (9) aufweist, in einer großtechnischen Anlage, insbesondere einem Kraftwerk, in einer Anordnung oder Positionierung an oder in der Nähe einer Komponente oder an einer dieser Komponente zugeordneten Schalt- oder Messstelle zur visualisierenden Darstellung eines Betriebszustandes der Komponente oder der dieser zugeordneten Schalt- oder Messstelle mittels der optischen Anzeigeeinheit (6) des Transponders (2), wobei die optische Anzeigeeinheit (6) die Anzahl der gespeicherten Zustands/Betriebsinformationseinheiten visualisiert anzeigt und bei einer Anzahl an gespeicherten Zustands-/Betriebsinformationseinheiten größer Null mittels des Steuerelements (9) ein Warnsignal auf der optischen Anzeigeeinheit (6) eingeblendet wird.

2. Verwendung eines Transponders (2) nach Anspruch 1 zur Ausbildung eines eine Schreib-Lese-Einheit (3) umfassenden Kommunikationssystems.

3. Verwendung eines Transponders (2) nach Anspruch 1 oder 2 zur Ausbildung eines ein EDV-System umfassenden Informationssystems.

4. Verwendung eines Transponders (2) nach einem der vorhergehenden Ansprüche im Rahmen von Instandhaltungs-, Wartungs- und/oder Reparaturarbeiten an der Komponente und/oder der großtechnischen Anlage.

5. Verwendung eines Transponders (2) nach einem der vorhergehenden Ansprüche **gekennzeichnet durch** eine feste Anordnung des Transponders (2) an der Komponente.

6. Verwendung eines Transponders (2) nach einem der vorhergehenden Ansprüche, **dadurch gekennzeichnet, dass**
in dem Speicherelement (10) eine Transponder-Identifizierungsinformationseinheit dauerhaft gespeichert ist und mindestens eine Zustands-/Betriebsinformationseinheit, die eine dem Transponder (2) zugeordnete Komponente betrifft, gespeichert wird,
wobei die Transponder-Identifizierungsinformationseinheit und die mindestens eine Zustands-/Betriebsinformationseinheit über das Sendeelement (8) aus dem Speicherelement (10) gelesen werden und die mindestens eine Zustands-/Betriebsinformationseinheit über das Empfangselement (7) dem Speicherelement (10) zugeführt wird,
und wobei der Transponder (2) so ausgelegt ist, dass zumindest ein Teil der in den Zustands-/Betriebsinformationseinheiten enthaltenen Information auf der optischen Anzeigeeinheit (6) dargestellt wird.

7. Verwendung eines Transponders (2) nach einem der vorhergehenden Ansprüche, **dadurch gekennzeichnet, dass** die optische Anzeigeeinheit (6) nicht die Zustands-/Betriebsinformationseinheit selbst visualisiert anzeigt.

8. Verwendung eines Transponders (2) nach einem der vorhergehenden Ansprüche, **dadurch gekennzeichnet, dass** die in dem Speicherelement (10) speicherbaren Zustands-/Betriebsinformationseinheiten jeweils eine Information hinsichtlich eines Zu- oder Abschaltungszustands der Komponente und/oder einer zuletzt durchgeführten Wartung der Komponente und/oder einer zuletzt durchgeführten behördlichen Prüfung der Komponente und/oder einer zuletzt durchgeführten Messwertaufnahme der Komponente umfassen.

9. Verwendung eines Transponders (2) nach einem der vorhergehenden Ansprüche, **dadurch gekennzeichnet, dass** die optische Anzeigeeinheit (6) eine Anzeige auf Basis von elektronischer Tinte mit bistabilen Anzeigelementen ist und/oder der Transponder (2) ein RFID-Transponder ist.

10. Verwendung eines Transponders (2) nach einem der Ansprüche 2 bis 9, **dadurch gekennzeichnet, dass** in der Schreib-Lese-Einheit (3) zumindest eine Zustands-/Betriebsinformationseinheit und zumindest eine Identifizierungsinformationseinheit gespeichert sind, wobei jeder Identifizierungsinformationseinheit wenigstens eine Zustands-/Betriebsinformationseinheit zugeordnet ist, von der Schreib-Lese-Einheit (3) eine Transponder-Identifizierungsinformationseinheit aus dem Speicherelement (10) des Transponders (2) auslesbar ist und die Schreib-Lese-Einheit (3) in Abhängigkeit von der ausgelesenen Transponder-Identifizierungsinformationseinheit zumindest eine Zustands-/Betriebsinformationseinheit von der Schreib-Lese-Einheit (3) auf den Transponder (2) überträgt und/oder dass der Inhalt der wenigstens einen Zustands-/Betriebsinformationseinheit, die in der Schreib-Lese-Einheit (3) gespeichert ist, vor der Übertragung auf den Transponder (2) von einem Benutzer der Schreib-Lese-Einheit (3) veränderbar ist und/oder dass die Schreib-Lese-Einheit (3) dazu ausgelegt ist, die vom Transponder (2) ausgelesene Transponder-Identifizierungsinformationseinheit mit der zumindest einen in der Schreib-Lese-Einheit (3) gespeicherten Identifizierungsinformationseinheit zu vergleichen und/oder dass bei Übereinstimmung des Inhalts der Transponder-Identifizierungsinformationseinheit und einer Identifizierungsinformationseinheit die Schreib-Lese-Einheit (3) im Transponder (2) gespeicherte Zustands-/Betriebsinformationseinheiten ausliest und/oder eine mindestens der Identifizierungsinformationseinheit zugeordnete, in der Schreib-Lese-Einheit (3) gespeicherte Zustands-/Betriebsinformationseinheit von der Schreib-Lese-Einheit (3) auf den Transponder (2) überträgt und/oder dass bei Übereinstimmung des Inhalts der Transponder-Identifizierungsinformationseinheit und einer Identifizierungsinformationseinheit die Schreib-Lese-Einheit (3) ein Steuersignal an den Transponder (2) sendet, welches das Steuerelement (9) dazu veranlasst, eine im Speicherelement (10) gespeicherte Zustands-/Betriebsinformationseinheit zu löschen.

11. Verwendung eines Transponders (2) nach einem der Ansprüche 3 bis 10, **dadurch gekennzeichnet, dass** zumindest eine der in einer Schreib-Lese-Einheit (3) gespeicherten Zustands-/Betriebsinformationseinheiten von dem zentralen EDV-System (4) aus der Schreib-Lese-Einheit (3) ausgelesen wird und in der Schreib-Lese-Einheit (3) zu speichernde Zustands-/Betriebsinformationseinheiten von dem zentralen EDV-System (4) auf die Schreib-Lese-Einheit (3) übertragen werden und/oder dass das zentrale EDV-System (4) dazu ausgelegt ist, von der Schreib-Lese-Einheit (3) ausgelesene Zustands-/Betriebsinformationseinheiten zu verarbeiten, insbesondere mit in dem EDV-System (4) gespeicherten Zustands-/Betriebsinformationseinheiten zu vergleichen.

12. Verfahren zur Durchführung von Instandhaltungs-, Wartungs- und/oder Reparaturarbeiten an einer Komponente und/oder an einer dieser Komponente zugeordneten Schalt-oder Messstelle einer großtechnischen Anlage, insbesondere Kraftwerk, wobei ein Transponder (2), der ein Empfangselement (7), ein Sendeelement (8), eine optische Anzeigeeinheit (6) und ein Speicherelement (10) zur Speicherung mindestens einer Zustands-/Betriebsinformationseinheit sowie ein wirkmäßig mit diesen verbundenes Steuerelement (9) aufweist, an oder in der Nähe der Komponente oder an der dieser Komponente zugeordneten Schalt- oder Messstelle angeordnet wird, wobei mittels der optischen Anzeigeneinheit (6) des Transponders (2) auf dieser ein Betriebszustand der Komponente oder der dieser zugeordneten Schalt- oder Messstelle visualisiert angezeigt wird, wobei die optsische Anzeigeeinheit (6) die Anzahl der gespeicherten Zustands-/ Betriebsinformationseinheiten visualisiert anzeigt und bei einer Anzahl an gespeicherten Zustands-/Betriebsinformationseinheiten größer Null mittels des Steuerelements (9) ein Warnsignal auf der optischen Anzeigeeinheit (6) eingeblendet wird.

13. Verfahren nach Anspruch 12, **dadurch gekennzeichnet, dass** eine Verwendung des Transponders (2) nach einem der Ansprüche 2 - 11 durchgeführt wird.

14. Großtechnische Anlage, insbesondere Kraftwerk, **dadurch gekennzeichnet, dass** sie/es mit einem nach einem der Ansprüche 1 - 11 verwendeten Transponders (2) ausgestattet ist.

## Claims

1. Use of a transponder (2) including a receiving element (7), a sending element (8), an optical display unit (6) and a memory element (10) for storing of at least one state/operations information unit as well as a control element (9) operatively connected therewith, in a large-scale plant, in particular a power plant, arranged or positioned at or near a component or at a switching or measuring point associated with such component for visual presentation of an operating state of the component or the switching or measuring point associated with such component by means of said optical display unit (6) of said transponder (2), wherein said optical display unit (6) displays the number of stored state/operations information units in a visualized manner, and wherein for a number of stored state/operations information units larger than zero an alarm signal will be shown on the optical display unit (6) by means of said control element (9).

2. Use of a transponder (2) as claimed in claim 1 for forming a communications system comprising a read-write unit.

3. Use of a transponder (2) as claimed in claim 1 or 2 for forming an information system comprising an IT system.

4. Use of a transponder (2) as claimed in any preceding claim in the course of servicing, maintenance and/or repair work performed on the component and/or the large-scale plant.

5. Use of a transponder (2) as claimed in any preceding claim, **characterized by** a fixed arrangement of the transponder (2) at the component.

6. Use of a transponder (2) as claimed in any preceding claim, **characterized in that**
a transponder identification information unit is stored permanently in the memory element (10), and wherein at least one state/operations information unit related to a component associated with the transponder is stored;
wherein the transponder identification information unit and the at least one state/operations information unit are read from the memory element (10) via the sending element (8), and wherein the at least one state/operations information unit is provided to the memory element (10) via said receiving element (7);
and wherein the transponder (2) is arranged so that the information contained in said state/operations information units is at least partially displayed on the optical display unit (6).

7. Use of a transponder (2) as claimed in any preceding claim, **characterized in that** the optical display unit (6) does not display the state/operations information unit visualized itself.

8. Use of a transponder (2) as claimed in any preceding claim, **characterized in that** the state/operations information units storable in the memory element (10) each include an information relating to a switching-on or switching-off state of the component and/or to recently performed maintenance of the component and/or to recently performed official inspection of the component and/or to recently performed recording of measurement values of the component.

9. Use of a transponder (2) as claimed in any preceding claim, **characterized in that** the optical display unit (6) is a display on the basis of electronic ink including bistable display elements, and/or wherein the transponder (2) is a RFID transponder.

10. Use of a transponder (2) as claimed in any of the claims 2 to 9, **characterized in that** at least one state/operations information unit and at least one identification information unit are stored in the read-write unit (3), wherein at least one state/operations information unit is associated with each identification information unit, wherein a transponder identification information unit can be read out by the read-write unit (3) from the memory element (10) of the transponder (2), and wherein the read-write unit (3) depending on the read out transponder identification information unit transmits at least one state/operations information unit from the read-write unit (3) to the transponder (2), and/or wherein the content of the at least one state/operations information unit which is stored in the read-write unit (3) can be amended by a user of the read-write unit (3) before transmission to the transponder (2), and/or wherein the read-write unit (3) is arranged to compare the transponder identification information unit read out from the transponder (2) with the at least one identification information unit stored in the read-write unit (3), and/or wherein in case of a match between the content of the transponder identification information unit and an identification information unit the read-write unit (3) reads out the state/operations information units stored in the transponder (2) and/or transmits state/operations information unit stored in the read-write unit (3) which is at least associated with the identification information unit from the read-write unit (3) to the transponder (2), and or wherein in case of a match between the content of the transponder identification information unit and an identification information unit the read-write unit (3) sends a control signal to the transponder (2), which causes the control element (9) to delete state/operations information unit stored in the memory element (10).

11. Use of a transponder (2) as claimed in any of the claims 3 to 10, **characterized in that** at least one of the state/operations information units stored in the read-write unit (3) is read out from the read-write unit (3) by the central IT system (4), and wherein state/operations information units to be stored in the read-write unit (3) are transferred from the central IT system (4) to the read-write unit (3), and/or wherein the central IT system (4) is arranged to process state/operations information units read out from the read-write unit (3), in particular for comparison with state/operations information units stored in the IT system (4).

12. A method for performing servicing, maintenance and/or repair work on a component and/or on a switching or measuring point of a large-scale plant, in particular a power plant, associated with such component, wherein a transponder (2) which includes a receiving element (7), a sending element (8), an optical display unit (6) and a memory element (10) for storing of at least one state/operations information unit as well as a control element (9) operatively connected therewith is positioned at or near the component the switching or measuring point associated with such component, wherein by means of the optical display unit (6) of the transponder (2) an operative sate of the component or the switching or measurement point associated with such component is displayed in a visualized manner, wherein said optical display unit (6) displays the number of stored state/operations information units in a visualized manner, and wherein for a number of stored state/operations information units larger than zero an alarm signal will be shown on the optical display unit (6) by means of said control element (9).

13. The method as claimed in claim 12, **characterized in that** a use of the transponder (2) as claimed in any of the claims 2 to 11 is performed.

14. A large-scale plant, in particular a power plant, **characterized in that** it is equipped with a transponder (2) being used as claimed in any of the claims 1 to 11.

## Revendications

1. Utilisation d'un transpondeur (2), qui présente un élément de réception (7), un élément d'émission (8), une unité d'affichage optique (6) et un élément de mémorisation (10) pour la mémorisation d'au moins une unité d'informations d'état / de fonctionnement ainsi qu'un élément de commande (9) relié en rapport fonctionnel avec ceux-ci, dans une installation à l'échelon industriel, en particulier une centrale électrique, dans une disposition ou un positionnement sur ou à proximité d'un composant ou sur un point de commutation ou de mesure affecté à ce composant pour la représentation visualisée d'un état de fonctionnement du composant ou du point de commutation ou de mesure affecté à celui-ci moyennant l'unité d'affichage optique (6) du transpondeur (2), dans laquelle l'unité d'affichage optique (6) affiche visuellement le nombre d'unités d'informations d'état / de fonctionnement mémorisées et dans quelle, pour un nombre d'unités d'informations d'état / de fonctionnement mémorisées supérieures à zéro, un signal d'avertissement est affiché sur l'écran de l'unité d'affichage optique (6) au moyen de l'élément de commande (9).

2. Utilisation d'un transpondeur (2) selon la revendication 1 pour la constitution d'un système de communication comprenant une unité de lecture-écriture (3).

3. Utilisation d'un transpondeur (2) selon la revendication 1 ou 2 pour la constitution d'un système d'informations comprenant un système de traitement électronique des données.

4. Utilisation d'un transpondeur (2) selon l'une quelconque des revendications précédentes dans le cadre de travaux d'entretien, de maintenance et/ou de réparation sur le composant et/ou l'installation à l'échelon industriel.

5. Utilisation d'un transpondeur (2) selon l'une quelconque des revendications précédentes, **caractérisée par** un aménagement fixe du transpondeur (2) sur le composant.

6. Utilisation d'un transpondeur (2) selon l'une quelconque des revendications précédentes, **caractérisée en ce que**,
dans l'élément de mémorisation (10), une unité d'informations d'identification est mémorisée en permanence et **en ce qu'**au moins une unité d'informations d'état / de fonctionnement concernant un composant affecté au transpondeur (2) est mémorisée,
dans laquelle l'unité d'informations d'identification de transpondeur et la au moins une unité d'informations d'état / de fonctionnement sont lues, par l'élément d'émission (8), dans l'élément de mémorisation (10) et la au moins une unité d'informations d'état / de fonctionnement est transmise, via l'élément de réception (7), vers l'élément de mémorisation (10), et
dans laquelle le transpondeur (2) est conçu de sorte qu'au moins une partie des informations contenues dans les unités d'informations d'état / de fonctionnement soit représentée sur l'unité d'affichage optique (6).

7. Utilisation d'un transpondeur (2) selon l'une quelconque des revendications précédentes, **caractérisée en ce que** l'unité d'affichage optique (6) n'affiche pas visuellement l'unité d'informations d'état / de fonctionnement elle-même.

8. Utilisation d'un transpondeur (2) selon l'une quelconque des revendications précédentes, **caractérisée en ce que** les unités d'informations d'état / de fonctionnement mémorisables dans l'élément de mémorisation (10) comprennent respectivement une information concernant un état de mise en circuit ou de mise hors circuit du composant et/ou concernant une maintenance du composant réalisée en dernier lieu et/ou un examen administratif du composant réalisé en dernier lieu et/ou un enregistrement de valeur de mesure du composant réalisé en dernier lieu.

9. Utilisation d'un transpondeur (2) selon l'une quelconque des revendications précédentes, **caractérisée en ce que** l'unité d'affichage optique (6) est un affichage à base d'encre électronique avec des éléments d'affichage bistables et/ou **en ce que** le transpondeur (2) est un transpondeur RFID.

10. Utilisation d'un transpondeur (2) selon l'une quelconque des revendications 2 à 9, **caractérisée en ce que**, dans l'unité de lecture-écriture (3), au moins une unité d'informations d'état / de fonctionnement et au moins une unité d'informations d'identification sont mémorisées, dans laquelle, à chaque unité d'informations d'identification est affecté au moins une unité d'informations d'état / de fonctionnement, **en ce qu'**une unité d'informations d'identification de transpondeur peut être lue, par l'unité de lecture-écriture (3), dans l'élément de mémorisation (10) du transpondeur (2) et **en ce que** l'unité de lecture-écriture (3) transmet, en fonction de l'unité d'informations d'identification de transpondeur lue, au moins une unité d'informations d'état / de fonctionnement à partir de l'unité de lecture-écriture (3) vers le transpondeur (2) et/ou **en ce que** le contenu de la au moins une unité d'informations d'état / de fonctionnement, qui est mémorisée dans l'unité de lecture-écriture (3), peut être modifiée, avant la transmission vers le transpondeur (2), par un utilisateur de l'unité de lecture-écriture (3) et/ou **en ce que** l'unité de lecture-écriture (3) est conçue pour comparer l'unité d'informations d'identification de transpondeur lue par le transpondeur (2) à la au moins une unité d'informations d'identification mémorisée dans l'unité de lecture-écriture (3) et/ou en ce que, dans le cas d'une correspondance entre le contenu de l'unité d'informations d'identification de transpondeur et celui d'une unité d'informations d'identification, l'unité de lecture-écriture (3) lit des unités d'informations d'état / de fonctionnement mémorisées dans le transpondeur (2) et/ou transmet une unité d'informations d'état / de fonctionnement affectée à, du moins, l'unité d'informations d'identification et mémorisée dans l'unité de lecture-écriture (3) à partir de l'unité de lecture-écriture (3) vers le transpondeur (2) et/ou **en ce que**, dans le cas d'une correspondance entre le contenu de l'unité d'informations d'identification de transpondeur et celui d'une unité d'informations d'identification, l'unité de lecture-écriture (3) envoie au transpondeur (2) un signal de commande, lequel déclenche la suppression d'une unité d'informations d'état / de fonctionnement, mémorisée dans l'élément de mémorisation (10), par l'élément de commande (9).

11. Utilisation d'un transpondeur (2) selon l'une quelconque des revendications 3 à 10, **caractérisée en ce qu'**au moins une des unités d'informations d'état / de fonctionnement mémorisées dans l'unité de lecture-écriture (3) est lue, par le système central de traitement électronique des données (4), dans l'unité de lecture-écriture (3) et **en ce que** des unités d'informations d'état / de fonctionnement à mémoriser dans l'unité de lecture-écriture (3) sont transmises, par le système central de traitement électronique des données s (4), vers l'unité de lecture-écriture (3) et/ou **en ce que** le système central de traitement électronique des données (4) est conçu pour traiter les unités d'informations d'état / de fonctionnement lues par l'unité de lecture-écriture (3), en particulier pour les comparer aux unités d'informations d'état / de fonctionnement mémorisées dans le système de traitement électronique des données (4).

12. Procédé de mise en oeuvre de travaux d'entretien, de maintenance et/ou de réparation sur un composant et/ou sur un point de commutation ou de mesure affecté à ce composant dans une installation à l'échelon industriel, en particulier une centrale électrique, dans lequel un transpondeur (2), qui présente un élément de réception (7), un élément d'émission (8), une unité d'affichage optique (6) et un élément de mémorisation (10) pour mémoriser au moins une unité d'informations d'état / de fonctionnement ainsi qu'un élément de commande (9) relié en rapport fonctionnel à ceux-ci, est disposé sur ou à proximité du composant ou sur le point de commutation ou de mesure affecté à ce composant, dans lequel, au moyen de l'unité d'affichage optique (6) du transpondeur (2), un état de fonctionnement du composant ou du point de commutation ou de mesure affecté à celui-ci est affiché visuellement sur celle-ci, dans lequel l'unité d'affichage optique (6) affiche visuellement le nombre d'unités d'informations d'état / de fonctionnement mémorisées et dans lequel pour un nombre d'unités d'informations d'état / de fonctionnement mémorisées supérieures à zéro, un signal d'avertissement est affiché sur l'écran de l'unité d'affichage optique (6) au moyen de l'élément de commande (9).

13. Procédé selon la revendication 12, **caractérisé en ce que** l'on met en oeuvre une utilisation du transpondeur (2) selon l'une quelconque des revendications 2 à 11.

14. Installation à l'échelon industriel, en particulier une centrale électrique, **caractérisée en ce qu'**elle est équipée d'un transpondeur (2) utilisé selon l'une quelconque des revendications 1 à 11.
